# EUROPEAN PATENT APPLICATION

(11) **EP 4 691 263 A1**
(43) Date of publication of application: **11.02.2026**
(21) Application number: 24780069.1
(22) Date of filing: 22.03.2024
(51) Int. Cl.: A23L 7/109, A23L 11/00

(54) **NOODLE-LIKE COMPOSITION, METHOD FOR PRODUCING NOODLE-LIKE COMPOSITION, AND NOODLE SET**

(30) Priority: 31.03.2023 JP 2023058983
(71) Applicant: Kikkoman Corporation, Noda-shi, Chiba 278-8601 (JP)
(72) Inventor: ONITSUKA, Tsubasa, Noda-shi, Chiba 278-8601 (JP); MATSUHIRA, Iyo, Noda-shi, Chiba 278-8601 (JP); NAGATAKI, Kafu, Noda-shi, Chiba 278-8601 (JP)
(74) Representative: Maiwald GmbH
(86) International application number: PCT/JP2024/011483
(87) International publication number: WO 2024/203951

(57) **Abstract**

An object of the present invention is to provide a noodle-shaped composition having good taste, flavor, and texture even when bean flour is blended, a method for producing the noodle-shaped composition, and a noodle set. The present invention relates to a noodle-shaped composition containing 35 mass% to 85 mass% of bean flour in terms of powder mass, in which a proportion of starch in the noodle-shaped composition is 20 mass% to 60 mass%, and a proportion of gluten in the noodle-shaped composition is 7 mass% to 25 mass%.

## Description

### TECHNICAL FIELD

The present invention relates to a noodle-shaped composition, a method for producing a noodle-shaped composition, and a noodle set.

### BACKGROUND ART

In the related art, noodles blended with bean flour that is high in protein and low in carbohydrates as compared with Chinese noodles containing general wheat flour as a main raw material, and various noodles have been proposed. For example, regarding noodles blended with soybean flour, Patent Literature 1 discloses noodles produced by blending 45 mass% to 70 mass% of wheat flour, 25 mass% to 50 mass% of barley flour, 1 mass% to 5 mass% of soybean flour, 0.5 mass% to 3 mass% of wheat germ, and 1 mass% to 5 mass% of vital wheat gluten. Patent Literature 2 discloses noodles containing 0.1 mass% to 5 mass% in total of either or both of full-fat soybean flour and unsteamed fermented soybean paste. Further, Patent Literature 3 discloses a method for producing cooked noodles in which soybean flour is blended in an amount of 5 mass% or more relative to wheat flour.

### CITATION LIST

### PATENT LITERATURE

Patent Literature 1: JPS58-134957A
Patent Literature 2: JPH05-284924A
Patent Literature 3: JP2007-54003A

### SUMMARY OF INVENTION

### TECHNICAL PROBLEM

There has been a problem that many noodles containing bean flour according to the related art provide a negative taste and flavor specific to beans. In addition, it is preferable that the noodles have a chewy texture, but there has also been a problem that the noodles blended with the bean flour have an unfavorable texture as noodles, such as powdery, crumbly texture, and a rough surface.

Therefore, an object of the present invention is to provide a noodle-shaped composition having good taste, flavor, and texture even when bean flour is blended, a method for producing the noodle-shaped composition, and a noodle set.

### SOLUTION TO PROBLEM

As a result of intensive studies to solve the above problems, the present inventors have found that, by blending starch and gluten in addition to the bean flour and setting contents thereof within predetermined ranges, a noodle-shaped composition having good taste, flavor, and texture can be obtained even when bean flour is contained, and have completed the present invention.

That is, the present invention is as follows.
[1] A noodle-shaped composition containing 35 mass% to 85 mass% of bean flour in terms of powder mass, in which a proportion of starch in the noodle-shaped composition is 20 mass% to 60 mass%, and a proportion of gluten in the noodle-shaped composition is 7 mass% to 25 mass%.
[2] The noodle-shaped composition according to [1] above, in which a strain at break measured by the following method 1 is 75% or more.

### [Method 1]

Using a texture analyzer, a surface of the noodle-shaped composition is pressed and broken by a wedge-shaped plunger at a descending speed of 1 mm/sec in a direction perpendicular to a longitudinal direction until a strain is 99%, and the strain when reaching a peak of a load in a load-strain curve obtained by continuously measuring the load is determined, and this strain is defined as the strain at break.

[3] The noodle-shaped composition according to [1] above, in which adhesion measured by the following method 2 is 0.03 mJ or more.

### [Method 2]

Using a texture analyzer, a surface of the noodle-shaped composition is pressed by a cylindrical plunger at a descending speed of 1 mm/sec in a direction perpendicular to a longitudinal direction until a strain is 50%, and a load is continuously measured to obtain a load-strain curve. In the curve, an area of a region where the noodle-shaped composition exhibits negative energy for pulling the plunger after the first compression is completed, and this area is defined as the adhesion.

[4] The noodle-shaped composition according to [1] above, in which the bean flour is at least one bean flour selected from the group consisting of chickpea flour, soybean flour, pea flour, kidney bean flour, mung bean flour, and lentil flour.

[5] The noodle-shaped composition according to [1] above, in which the bean flour is chickpea flour.

[6] The noodle-shaped composition according to [1] above, in which the bean flour is bean flour obtained by heating and steaming a raw bean material and milling the steamed raw bean material.

[7] The noodle-shaped composition according to [1] above, in which the bean flour has an average particle diameter of 10 µm to 60 µm.

[8] The noodle-shaped composition according to [1] above, in which the bean flour contains 20 mass% to 40 mass% of protein and 30 mass% to 60 mass% of carbohydrates.

[9] The noodle-shaped composition according to [1] above, in which at least a part of the starch contained in the noodle-shaped composition is derived from modified starches.

[10] A method for producing a noodle-shaped composition, which is a method for producing the noodle-shaped composition according to any one of [1] to [9] above, the method including: mixing bean flour, starch, and gluten to obtain a dough; rolling the obtained dough; and cutting the rolled dough into a noodle-shaped composition.

[11] The method for producing a noodle-shaped composition according to [10] above, including a step of heating and steaming the noodle-shaped composition cut into a noodle shape.

[12] The method for producing a noodle-shaped composition according to [10] above, including a step of drying the noodle-shaped composition cut into a noodle shape.

[13] The method for producing a noodle-shaped composition according to [10] above, including a step of obtaining the bean flour by heating and steaming a raw bean material and milling the steamed raw bean material.

[14] A noodle set including the noodle-shaped composition according to any one of [1] to [9] above and a seasoning liquid.

### ADVANTAGEOUS EFFECTS OF INVENTION

According to the present invention, a noodle-shaped composition having good taste, flavor, and texture even when bean flour is blended, a method for producing the noodle-shaped composition, and a noodle set can be provided.

### DESCRIPTION OF EMBODIMENTS

The structures and preferable modes of the present invention will be described in further detail below. In this description, "A to B" indicating a range means "A or more and B or less". Moreover, in this description, "weight" and "mass" and "weight%" and "mass%" are each regarded as synonyms.

### <Noodle-Shaped Composition>

The noodle-shaped composition of one embodiment of the present invention contains 35 mass% to 85 mass% of bean flour in terms of powder mass. A proportion of starch in the noodle-shaped composition is 20 mass% to 60 mass%, and a proportion of gluten in the noodle-shaped composition is 7 mass% to 25 mass%. The noodle-shaped composition of the present embodiment is based on the finding that, by containing the above predetermined amounts of the bean flour, starch, and gluten, the taste, flavor, and texture are good even if the bean flour is contained.

The reason why the taste, flavor, and texture are good even when the bean flour is blended, when the noodle-shaped composition of the present embodiment contains the above predetermined amounts of the bean flour, starch, and gluten is not clear, but is presumed as follows.

That is, it is known that proteins generally contained in beans form a network by a mechanism of action different from that of gluten derived from wheat. Therefore, the protein itself of beans can physically inhibit the formation of a gluten network as a physical foreign matter, and gluten can also inhibit the binding of the protein of beans. In addition, the beans contain a relatively large amount of starch, and therefore, the starch derived from the bean flour absorbs water prior to gluten and also acts to inhibit the gluten network. Due to these factors, it is not easy to adjust the blend of a noodle containing beans as raw materials, which can be originally processed as a noodle and has a preferred texture such as a crumbly texture as a noodle.

However, through extensive tests, the present inventors have found that by using the above blend of the bean flour, starch, and gluten, the protein of the beans and gluten does not remarkably inhibit each other, and conversely, the noodles have a preferable texture such as a chewy texture, and the taste and flavor are rather favorable, without imparting the negative taste and flavor typical of beans. Regarding such a texture, the noodles have a "low shear resistance", which is a key physical property related to the texture to be described later, unlike a crisp texture (referred to in this description as a "high shear resistance") formed mainly from a gluten network of ordinary wheat noodles. It is considered that this is achieved by the coexistence of protein binding of beans and the gluten network to some extent by being provided at the blending ratio of the present invention. That is, it is considered that the protein binding structure of beans and the gluten network structure having a different mechanism of action form a protein skeleton within each certain range of proportions, thereby providing a unique texture different from an elastic texture in the case of only the gluten network.

In addition to the mechanism of action of the protein of beans and gluten described above, the present inventors have also found that starch derived from each material provides certain adhesion to the surface of noodles during eating, as an element that contributes to the chewy texture. This is also defined in the present description as "high adhesion" which is a key physical property related to the texture to be described later. As is known, starch swells and gelatinizes through the water absorption and heating steps, but in the present invention, starch derived from the bean flour and modified starch blended therein also cause gelatinization mainly during the boiling cooking step when eating, and it is considered that gelatinized starch also contributes to a certain extent to the soft texture such as a chewy texture, together with the mechanism of action of the protein of beans and gluten described above. Furthermore, it is considered that the gelatinized starch eluted on the surface during boiling cooking exhibits another action, that is, an action of imparting a certain degree of viscosity to the surface of noodles after boiling cooking, so that the starch moderately sticks to the teeth in the mouth when chewed, and makes it easy to feel a low-shear texture.

In this regard, the present invention is not to be construed as being limited to those having the above mechanism of action.

In addition, the noodle-shaped composition of the present embodiment contains the above predetermined amounts of bean flour, starch, and gluten, and therefore, the time for heating and cooking can be shortened as compared with a noodle-shaped composition containing the bean flour according to the related art. This is presumably because the starch of the bean flour used in the present invention easily absorbs water, and a blending proportion of starch or gluten is appropriate. In this regard, the present invention is not to be construed as being limited to those having the above mechanism of action.

The noodle-shaped composition of the present embodiment includes various noodles made from cereal flour, such as Udon, Soba, Chinese noodles, pasta, and rice vermicelli. The form of the noodle-shaped composition is not limited, and may be any form such as fresh noodles, semi-dried noodles, dried noodles, boiled noodles, long-life noodles, instant noodles, and frozen noodles.

### (Bean Flour)

It is important that the noodle-shaped composition of the present embodiment contains 35 mass% to 85 mass% of the bean flour in terms of powder mass. When the bean flour is contained in an amount of 35 mass% or more in terms of powder mass, natural sweetness derived from beans and good texture characteristics (low shear resistance and high adhesion to be described later) can be achieved. In addition, when the bean flour is contained in an amount of 85 mass% or less in terms of powder mass, it is possible to maintain good texture characteristics without exhibiting excessive taste and flavor of beans as noodles, and excellent processing suitability when noodles are made by a noodle-making machine is obtained. Here, the processing suitability is classified into processing suitability during noodle making and processing suitability during cooking. The excellent processing suitability during noodle making means that the shape retention of the noodle dough is maintained at a certain level or more in a series of noodle making steps, and excessive adhesion of the noodle dough to the production facility or collapse thereof does not occur. The excellent processing suitability during cooking means that the noodles have a certain degree of shape retention during boiling cooking for consumption.

The content of the above bean flour is more preferably 40 mass% or more, and still more preferably 45 mass% or more, and is more preferably 70 mass% or less, and still more preferably 60 mass% or less.

The type of the bean flour in the noodle-shaped composition of the present embodiment is not particularly limited, and examples thereof include chickpea flour, soybean flour, pea flour, kidney bean flour, mung bean flour, and lentil flour. These bean flours may be used alone or in combination of two or more kinds thereof. That is, the bean flour contained in the noodle-shaped composition of the present embodiment may be at least one kind of bean flour selected from the group consisting of chickpea flour, soybean flour, pea flour, kidney bean flour, mung bean flour, and lentil flour.

Among them, from the viewpoint of obtaining natural sweetness and less unpleasant bean odor derived from beans, texture, and processing suitability, the noodle-shaped composition of the present embodiment preferably contains the chickpea flour as the bean flour.

A method for obtaining the bean flour is not particularly limited, and those commercially available may be used.

The bean flour in the noodle-shaped composition of the present embodiment is described later in the section <Method for Producing Noodle-Shaped Composition> and is preferably bean flour obtained by heating and steaming (performing a steaming treatment on) a raw bean material and milling the steamed raw bean material. Starch in such bean flour is partially gelatinized, so that processability is improved, and the bean flour is considered to be mainly excellent in the chewy texture.

The bean flour in the noodle-shaped composition of the present embodiment preferably has a protein dispersibility index (PDI) of 30 or more and 80 or less. It is presumed that the bean flour having a PDI within the above range can ensure more appropriate adhesion and binding properties when processed by adding water, and has a texture having more chewiness during eating. The PDI is a proportion of water-soluble proteins in the total protein, and can be determined as a percentage of a water-soluble nitrogen proportion to a total nitrogen proportion of the entire composition (water-soluble nitrogen proportion/total nitrogen proportion of entire composition × 100 (%)) according to a method in the related art. Specifically, water is added to a measurement sample in an amount that is 15 times the amount of the measurement sample, and the measurement sample is pulverized (pulverized at 8500 rpm for 10 minutes using Polytron Homogenizer PT3000 manufactured by KINEMATICA). Next, the homogenized solution is centrifuged at 2700 rpm for 10 minutes, and a value obtained by multiplying the total nitrogen proportion of the obtained supernatant by 6.25 is measured as the water-soluble protein proportion. The percentage of a value obtained by dividing the above value by the total protein proportion value obtained by multiplying the total nitrogen amount of the bean flour material by 6.25 is defined as the PDI value. The total nitrogen proportion is measured by a combustion method (modified Dumas method) stipulated in the Food Labeling Act ("Food Labeling Standards" (March 30, 2015, Food Labeling Table No. 139)).

When the PDI is 80 or less, it is considered that a network between proteins of beans is not excessively formed when water is added, a balance of binding between a gluten network and proteins of beans is not lost, for example, hardness and elasticity are excellent, and a chewiness which is a characteristic of the bean noodles of the present invention can be more favorably achieved. In addition, when the PDI is 30 or more, it is considered that the network structure between proteins when water is added is not too weak, the balance of binding between the gluten network and the proteins of beans is not lost, a preferable texture is obtained, sufficient binding properties can be ensured, and the dough is easily aggregated during processing. That is, it is considered that the bean flour having a PDI within the above range is excellent in both the binding property during processing and the chewiness during eating.

The bean flour in the noodle-shaped composition of the present embodiment preferably has an average particle diameter of 10 µm to 60 µm when measured with a particle size distribution analyzer. When the average particle diameter of the bean flour is within the above range, it is considered that the bean flour has good processing suitability when the noodles are made with a noodle-making machine, and contributes to a good texture such as a chewy texture. The average particle diameter of the bean flour is more preferably 10 µm to 50 µm, still more preferably 10 µm to 40 µm, and particularly preferably 10 µm to 30 µm. The particle size distribution may be measured in a state in which the powder is dispersed in water using a particle size distribution analyzer, for example, a laser particle size distribution analyzer SALD-2200 (manufactured by Shimadzu Corporation).

The bean flour in the noodle-shaped composition of the present embodiment preferably contains 20 mass% to 40 mass% of a protein. When the protein is contained in an amount of 20 mass% or more, it is considered that protein binding of beans to the gluten network contributes to a unique texture by the mechanism described above. In addition, when the protein is contained in an amount of 40 mass% or less, a more chewy texture can be achieved. The content of the above protein is more preferably 30 mass% or less.

The bean flour in the noodle-shaped composition of the present embodiment preferably contains 30 mass% to 60 mass% of a carbohydrates. Among them, starch is preferably contained in an amount of 20 mass% to 50 mass%. When the starch is contained in an amount of 20 mass% or more, it is considered that the bean flour has good processing suitability when the noodles are made with a noodle-making machine, and contributes to a good texture such as a chewy texture. In addition, when starch is contained in an amount of 50 mass% or less, there is no excessive adhesion, and good processability can be achieved. The content of the above starch is more preferably 30 mass% or more, still more preferably 35 mass% or more, and is more preferably 45 mass% or less.

### (Starch)

In the noodle-shaped composition of the present embodiment, it is important that the proportion of starch in the noodle-shaped composition is 20 mass% to 60 mass%. When the proportion of starch in the noodle-shaped composition is 20 mass% or more, it is possible to impart a texture having high adhesion during eating, which is the effect of the present invention. In addition, when the proportion of the starch in the noodle-shaped composition is 60 mass% or less, it is possible to impart a good texture without providing excessive adhesion as noodles. The proportion of starch in the noodle-shaped composition is more preferably 35 mass% or more, still more preferably 40 mass% or more, and yet still more preferably 45 mass% or more, and is more preferably 55 mass% or less, and still more preferably 50 mass% or less.

As the starch contained in the noodle-shaped composition of the present embodiment, a starch powder may be used. The type of the starch powder is not particularly limited, and preferred examples thereof include starches such as a corn starch, a high amylase corn starch, a wheat starch, a rice starch, a potato starch, and a tapioca starch, and modified starches obtained by subjecting starches to acetylation, hydroxypropylation, or the like. That is, at least a part of the starch contained in the noodle-shaped composition of the present embodiment is preferably derived from the modified starches. These starch powders may be used alone or in combination of two or more kinds thereof.

Among them, from the viewpoint of obtaining good taste and flavor, texture, and processing suitability, the noodle-shaped composition of the present embodiment preferably contains modified starch as the starch powder, and more preferably contains modified starch obtained by processing acetylated starch from tapioca as a raw material.

A method for obtaining the starch powder is not particularly limited, and a commercially available starch powder may be used.

The starch powder in the noodle-shaped composition of the present embodiment preferably has an average particle diameter of 5 µm to 55 µm when measured with a particle size distribution analyzer. When the particle diameter of the starch powder is within the above range, it is considered that the formation of the tissue structure of the bean protein and gluten is not inhibited, and good processing suitability can be obtained when processed with a noodle-making machine. The average particle diameter of the starch powder is more preferably 10 µm to 45 µm, still more preferably 15 µm to 35 µm, and particularly preferably 20 µm to 25 µm. The particle size distribution may be measured in a state in which the powder is dispersed in water using a particle size distribution analyzer, for example, a laser particle size distribution analyzer SALD-2200 (manufactured by Shimadzu Corporation).

The starch contained in the noodle-shaped composition of the present embodiment may be starch derived from the above bean flour. The amylose/amylopectin content ratio of the starch derived from the bean flour is preferably 0.82 or less on a mass basis. The amylose/amylopectin content ratio is indirectly determined by measuring the amylose content and subtracting the amylose content from 1 to obtain a value, and defining the value as the amylopectin content. At this time, the amylose content is measured by the ConA method (Yun and Matheson (1990)). In the ConA method, only amylopectin is precipitated by causing a reaction of concanavalin A, which is a protein specifically binding to amylopectin, and starch, and an amount of amylose remaining in the supernatant is quantified. More specifically, starch purified from the whole grain bean flour by ethanol treatment reacts with concanavalin A and then centrifuged to precipitate an amylopectin-concanavalin A complex. The supernatant is collected, amylose is decomposed with amylase into glucose, and the glucose is quantified by a glucose oxidase/peroxidase colorimetric method. Regarding the total amount of starch, a starch solution before reacting with concanavalin A reacts with amylase in the same manner as the amylose solution to decompose into glucose, and the glucose is quantified by the glucose oxidase/peroxidase colorimetric method. The amylose content can be determined by a proportion of the amylose content to the total amount of starch.

When the amylose/amylopectin content ratio is within the above range, the proportion of amylopectin is relatively high. As a result, the texture is considered to be excellent in terms of chewiness. Amylose has a structure in which glucose is bonded in a straight chain, whereas amylopectin has a structure in which glucose is bonded in a branched chain. Therefore, amylopectin is characterized in that water is easily held in a gap of the branched structure, amylopectin tends to become viscous after swelling, and the dough also becomes sticky and tends to have a chewy texture when made into noodles. That is, it is presumed that the noodle-shaped composition containing the bean flour having a high amylopectin content contains water and is likely to swell, gives an appropriate viscosity to the dough, contributes to processability, and as a result, a chewy texture of the noodles is obtained.

### (Gluten)

In the noodle-shaped composition of the present embodiment, it is important that the proportion of gluten in the noodle-shaped composition is 7 mass% to 25 mass%. When the proportion of gluten in the noodle-shaped composition is 7 mass% or more, it is possible to avoid an inappropriate texture such as excessive softness as noodles and impart hardness and elasticity within a general range as noodles. In addition, it is considered that a gluten network is formed, and good processing suitability is obtained. In addition, when the proportion of gluten in the noodle-shaped composition is 25 mass% or less, the low shear resistance specific to the present invention is achieved. The proportion of gluten in the noodle-shaped composition is more preferably 8 mass% or more, and is more preferably 14 mass% or less, and still more preferably 12 mass% or less.

The type of gluten in the noodle-shaped composition of the present embodiment is not particularly limited, and examples thereof include wheat gluten and corn gluten. These glutens may be used alone or in combination of two or more kinds thereof.

Among them, from the viewpoint of obtaining good taste and flavor, texture, and processing suitability, the noodle-shaped composition of the present embodiment preferably contains wheat gluten as the gluten.

The form of gluten is not particularly limited, and any of raw gluten, powdery active gluten, and modified gluten obtained by chemically treating raw gluten or active gluten and then performing drying and powdering may be used.

A method for obtaining the gluten is not particularly limited, and gluten that is commercially available may be used.

In the noodle-shaped composition of the present embodiment, a ratio of the content of starch in the noodle-shaped composition to the content of the bean flour in terms of powder mass (total starch amount/bean flour amount) is preferably 0.45 to 1.4, more preferably 0.62 to 1.2, and still more preferably 0.8 to 1.0 on a mass basis. When the ratio is within the above range, the starch does not inhibit the binding structure of the protein derived from the bean flour described above. Therefore, it is considered that the starch has a low shear resistance and exhibits a preferable chewiness derived from the gelatinized starch when heated and cooked.

In the noodle-shaped composition of the present embodiment, a ratio of the content of gluten in the noodle-shaped composition to the content of starch in the noodle-shaped composition (total gluten amount/total starch amount) is preferably 1.6 to 7.5, more preferably 2.8 to 6.3, and still more preferably 4.0 to 5.0 on a mass basis. When the ratio is within the above range, the starch does not inhibit the formation of a gluten network. Therefore, it is considered that the starch has a strength required during processing and exhibits a preferable chewiness derived from the gelatinized starch.

In the noodle-shaped composition of the present embodiment, a ratio of the content of the bean flour in terms of powder mass to the content of gluten in the noodle-shaped composition (total gluten amount/bean flour amount) is preferably 0.1 to 0.45, more preferably 0.12 to 0.35, and still more preferably 0.15 to 0.25 on a mass basis. When the ratio is within the above range, the binding structure of the protein derived from beans and the formation of the gluten network do not inhibit each other. Accordingly, it is considered that the low shear resistance and the high adhesion of the protein derived from beans can be achieved while maintaining the noodle strength provided by the gluten network.

In the noodle-shaped composition of the present embodiment, a ratio of the content of the purified starch in the noodle-shaped composition to the content of the bean flour in terms of powder mass (purified starch amount/bean flour amount) is preferably 0 to 0.9, more preferably 0.2 to 0.8, and still more preferably 0.3 to 0.5 on a mass basis. The mechanism is presumed to be similar to that in the case of the total gluten amount/total starch amount.

In the noodle-shaped composition of the present embodiment, a ratio of the content of purified gluten in the noodle-shaped composition to the content of purified starch in the noodle-shaped composition (purified starch amount/purified gluten amount) is preferably 0 to 4.5, more preferably 0.5 to 3.5, and still more preferably 1.0 to 2.5 on a mass basis. The mechanism is presumed to be similar to that in the case of total starch amount/total gluten amount.

In the noodle-shaped composition of the present embodiment, a ratio of the content of the bean flour in terms of powder mass to the content of the purified gluten in the noodle-shaped composition (purified gluten amount/bean flour amount) is preferably 0.1 to 0.45, more preferably 0.12 to 0.35, and still more preferably 0.15 to 0.25 on a mass basis. The mechanism is presumed to be similar to that in the case of the bean flour amount/total gluten amount.

### (Other Raw Materials)

The noodle-shaped composition of the present embodiment may contain, in addition to the raw materials described above, other raw materials such as salts, water, dried egg white, vegetable fats and oils, animal fats and oils, brewed vinegar, pH adjusters, trehalose, sorbitol, thickeners, glycine, emulsifiers, antioxidants (vitamin E, rosemary extracts, and the like), vitamin C, acidulants, colorants, fragrances, kansui, alcohol, yeast, sugars, milk, and processed products thereof. The above other raw materials and the blending amounts thereof can be appropriately selected and set according to the type and purpose of the noodle-shaped composition.

### (Strain at break)

The noodle-shaped composition of the present embodiment can have a preferable texture as noodles, such as a chewy texture. The noodles containing bean flour according to the related art were too crisp when chewed, resulting in a crumbly texture, and the texture of the noodles is not preferable. On the other hand, the noodle-shaped composition of the present embodiment is not crisp when chewed, and a preferable texture of noodles, such as a chewy texture, can be achieved. That is, the noodle-shaped composition of the present embodiment can have low shearing properties, and in particular, the strain at break measured by the following method 1 is preferably 75% or more.

### [Method 1]

Using a texture analyzer, a surface of the noodle-shaped composition is pressed and broken by a wedge-shaped plunger at a descending speed of 1 mm/sec in a direction perpendicular to a longitudinal direction until a strain is 99%, and the strain when reaching a peak of a load in a load-strain curve obtained by continuously measuring the load is determined, and this strain is defined as the strain at break.

The above strain at break is more preferably 80% or more, still more preferably 85% or more, and particularly preferably 90% or more. Further, the above strain at break is generally 98% or less.

### (Adhesion)

The noodle-shaped composition of the present embodiment can have a preferable texture as noodles, such as a chewy texture. The noodles containing bean flour according to the related art have a weak adhesion to teeth, a tongue, or the like when chewed, and the texture of the noodles is not preferable. On the other hand, the noodle-shaped composition of the present embodiment has a strong adhesion to teeth, a tongue, or the like when chewed, and can have a preferable texture as a noodle, such as a chewy texture. That is, the noodle-shaped composition of the present embodiment can have high adhesion, and in particular, the adhesion measured by the following method 2 is preferably 0.03 mJ or more.

### [Method 2]

Using a texture analyzer, a surface of the noodle-shaped composition is pressed by a cylindrical plunger at a descending speed of 1 mm/sec in a direction perpendicular to a longitudinal direction until a strain is 50%, and a load is continuously measured to obtain a load-strain curve. In the curve, an area of a region where the noodle-shaped composition exhibits negative energy for pulling the plunger after the first compression is completed, and this area is defined as the adhesion.

The above adhesion is more preferably 0.04 mJ or more, still more preferably 0.05 mJ or more, and particularly preferably 0.07 mJ or more. The above adhesion is generally 0.30 mJ or less.

The noodle-shaped composition of the present embodiment preferably exhibits excellent values in both the above strain at break and the above adhesion. Specifically, the above strain at break is more preferably 75% or more, and the above adhesion is more preferably 0.03 mJ or more.

### (Other Physical Properties)

In the noodle-shaped composition of the present embodiment, the elasticity measured by the following method 3 is preferably 0.05 N/mm or more and 0.40 N/mm or less from the viewpoint of the range of texture of general elasticity of noodles.

### [Method 3]

Using a texture analyzer, a surface of the noodle-shaped composition is pressed and broken by a wedge-shaped plunger at a descending speed of 1 mm/sec in a direction perpendicular to the longitudinal direction until a strain is 99%, and the slope (N/mm) in the region of the strain of 0% to 10% of the load-strain curve obtained by continuously measuring the load is determined. This slope is referred to as elasticity.

The above elasticity is more preferably 0.35 N/mm or less, still more preferably 0.30 N/mm or less, and particularly preferably 0.25 N/mm or less. In addition, the above elasticity is generally 0.02 N/mm or more.

The hardness of the noodle-shaped composition of the present embodiment, which is measured by the following method 4, is preferably 1.6 N or less from the viewpoint of the range of the texture of the general hardness as noodles.

### [Method 4]

Using a texture analyzer, a surface of the noodle-shaped composition is pressed and broken by a wedge-shaped plunger at a descending speed of 1 mm/sec in a direction perpendicular to a longitudinal direction until a strain is 99%, and the load when reaching a peak of a load in a load-strain curve obtained by continuously measuring the load is determined, and this is defined as the breaking load.

The above hardness is more preferably 1.4 N or less, still more preferably 1.2 N or less, and particularly preferably 1.0 N or less. Further, the above hardness is generally 0.1 N or more.

The noodle-shaped composition of the present embodiment preferably has a gelatinization degree of 5% to 40%. It is presumed that when the gelatinization degree is within the above range, the binding property when water is added is excellent, and as a result, good processing suitability is obtained. The gelatinization refers to a state in which a micelle structure in which starch molecules are regularly arranged as seen in raw starch loses regularity due to hydrogen bonds being broken by the addition of water and heat treatment, and the gelatinization degree is a numerical value indicating a gelatinization ratio of starch particles and is measured by glucoamylase method II. A material in a state in which hydrogen bonds or the like are broken and the network structure of starch is loosened has a higher water absorption rate and is likely to gel when water is added, compared with a material that is not in such a state. That is, it is presumed that this improves the binding property and is excellent in processing suitability. In addition, when dried noodles are subjected to boiling cooking or the like during eating, it is considered that high water absorbency contributes to the rapid water absorption during the cooking process, and a good texture is easily obtained.

### <Method for Producing Noodle-Shaped Composition>

For example, in the case of dried noodles, the noodle-shaped composition of the present embodiment can be produced by mixing various raw materials, rolling a dough resting for a predetermined time to a predetermined thickness, and drying raw noodles cut out to a predetermined thickness.

More specifically, a method for producing a noodle-shaped composition of one embodiment of the present invention (hereinafter, also simply referred to as a production method of the present embodiment) is characterized in that bean flour, starch, and gluten are mixed to obtain a dough, the obtained dough is rolled, and the rolled dough is cut into a noodle shape to obtain a noodle-shaped composition.

The blending amounts of the other raw materials are adjusted such that the bean flour is contained in an amount of 35 mass% to 85 mass% in terms of powder mass, the proportion of starch in the noodle-shaped composition is 20 mass% to 60 mass%, and the proportion of gluten in the noodle-shaped composition is 7 mass% to 25 mass%.

The production method of the present embodiment can include a step of heating and steaming (performing a steaming treatment on) the noodle-shaped composition cut into a noodle shape. Accordingly, gelatinization of the starch contained in the composition is promoted, and the texture of the starch can be adjusted to a chewy and elastic texture. The heating and steaming method is not particularly limited, and is preferably performed, for example, using a steaming machine under a temperature condition of about 90°C to 100°C.

The production method of the present embodiment preferably includes a step of drying the noodle-shaped composition cut into a noodle shape. Accordingly, long-term storage stability at normal temperature can be obtained. The drying method is not particularly limited, and for example, the drying is preferably performed using a low-temperature blow dryer at 80°C for 3 hours.

The production method of the present embodiment preferably includes a step of obtaining bean flour of the above raw material by heating and steaming a raw bean material and milling the steamed raw bean material. Accordingly, when a part of the starch is gelatinized, it is considered that water is easily absorbed and the dough has good cohesion when kneaded. The heating and steaming method is not particularly limited, and is preferably performed under a temperature condition of about 80°C to 100°C using, for example, a steaming machine.

### <Noodle Set>

A noodle set according to one embodiment of the present invention includes the noodle-shaped composition and a seasoning liquid. A noodle-shaped composition used in the noodle set of the present embodiment may be the noodle-shaped composition described above, and the type thereof is not particularly limited. Various noodles such as Udon, Soba, Chinese noodles, pasta, and rice vermicelli can be used. In addition, the seasoning liquid may be any liquid that can be used to season noodles, and examples of the seasoning liquid include noodle soup, concentrated soup, and pasta sauce, and may contain ingredients in addition to the liquid component.

As described above, the following matters are disclosed in the present description.
[1] A noodle-shaped composition containing 35 mass% to 85 mass% of bean flour in terms of powder mass, in which a proportion of starch in the noodle-shaped composition is 20 mass% to 60 mass%, and a proportion of gluten in the noodle-shaped composition is 7 mass% to 25 mass%.
[2] The noodle-shaped composition according to [1] above, in which a strain at break measured by the following method 1 is 75% or more.

### [Method 1]

Using a texture analyzer, a surface of the noodle-shaped composition is pressed and broken by a wedge-shaped plunger at a descending speed of 1 mm/sec in a direction perpendicular to a longitudinal direction until a strain is 99%, and the strain when reaching a peak of a load in a load-strain curve obtained by continuously measuring the load is determined, and this strain is defined as the strain at break.

[3] The noodle-shaped composition according to [1] or [2] above, in which adhesion measured by the following method 2 is 0.03 mJ or more.

### [Method 2]

Using a texture analyzer, a surface of the noodle-shaped composition is pressed by a cylindrical plunger at a descending speed of 1 mm/sec in a direction perpendicular to a longitudinal direction until a strain is 50%, and a load is continuously measured to obtain a load-strain curve. In the curve, an area of a region where the noodle-shaped composition exhibits negative energy for pulling the plunger after the first compression is completed, and this area is defined as the adhesion.

[4] The noodle-shaped composition according to any one of [1] to [3] above, in which the bean flour is at least one bean flour selected from the group consisting of chickpea flour, soybean flour, pea flour, kidney bean flour, mung bean flour, and lentil flour.

[5] The noodle-shaped composition according to any one of [1] to [4] above, in which the bean flour is chickpea flour.

[6] The noodle-shaped composition according to any one of [1] to [5] above, in which the bean flour is bean flour obtained by heating and steaming a raw bean material and milling the steamed raw bean material.

[7] The noodle-shaped composition according to any one of [1] to [6] above, in which the bean flour has an average particle diameter of 10 µm to 60 µm.

[8] The noodle-shaped composition according to any one of [1] to [7] above, in which the bean flour contains 20 mass% to 40 mass% of protein and 30 mass% to 60 mass% of carbohydrates.

[9] The noodle-shaped composition according to any one of [1] to [8] above, in which at least a part of the starch contained in the noodle-shaped composition is derived from modified starches.

[10] A method for producing a noodle-shaped composition, which is a method for producing the noodle-shaped composition according to any one of [1] to [9] above, the method including: mixing bean flour, starch, and gluten to obtain a dough; rolling the obtained dough; and cutting the rolled dough into a noodle-shaped composition.

[11] The method for producing a noodle-shaped composition according to [10] above, including a step of heating and steaming the noodle-shaped composition cut into a noodle shape.

[12] The method for producing a noodle-shaped composition according to [10] or [11] above, including a step of drying the noodle-shaped composition cut into a noodle shape.

[13] The method for producing a noodle-shaped composition according to any one of [10] to [12] above, including a step of obtaining the bean flour by heating and steaming a raw bean material and milling the steamed raw bean material.

[14] A noodle set including the noodle-shaped composition according to any one of [1] to [9] above and a seasoning liquid.

### [Examples]

The present invention will be described in further detail below by Examples. Here, the present invention is not limited to these Examples. In the following, "%" representing a content ratio of each component is based on mass unless otherwise specified.

### Test Example 1: Test Groups with Varying Bean Flour Proportions

### <Production of Noodle-Shaped Composition>

A mixed powder of chickpea flour (Steamed Chickpea Flour manufactured by Natural Product, hereinafter, referred to as "SCF"), modified starch (SAKURA 1000 manufactured by Matsutani Chemical Industry Co., Ltd., hereinafter, referred to as "SAKURA"), whole grain wheat flour (Superfine Wholegrain Flour manufactured by Prima Taste, hereinafter, referred to as "SWF"), and gluten (for example, "VITEN" manufactured by Rouquette), which were blended at mass proportions shown in Table 1 below, was mixed using a noodle-making machine (manufactured by Taisei Machinery Co., Ltd.) while adding water at a ratio of about 27% of the total amount with about 3.2% saline solution, and noodles having a thickness of 1.5 mm and a width of 1.5 mm were made by final rolling. The resulting noodle-shaped composition was dried at a condition of 80°C for 3 hours using a hot air dryer to obtain noodle-shaped compositions of Examples 1 to 5.

### Test Example 2: Test Groups with Varying Starch Proportions

Each material blended at the mass proportions shown in Table 1 below was experimentally produced in the same manner as in Test Example 1 to obtain noodle-shaped compositions of Examples 6 to 11.

### Test Example 3: Test Groups with Varying Gluten Proportions

Each material blended at the mass proportions shown in Table 1 below was experimentally produced in the same manner as in Test Example 1 to obtain noodle-shaped compositions of Examples 12 to 17.

### [Table 1]

**[Table 1]**

| | Examples | Materials | | | | Noodle-shaped composition | | | Noodle-shaped composition | | | | | |
|---|---|---|---|---|---|---|---|---|---|---|---|---|---|---|
| | | Bean flour | Modified starch | Whole grain wheat flour | Gluten | Amount of bean flour in terms of powder mass | Proportion of starch in noodle-shaped composition | Proportion of gluten in noodle-shaped composition | Total amount of starch/amount of bean flour | Total amount of gluten/amount of bean flour | Amount of purified starch/amount of bean flour | Amount of purified gluten/amount of bean flour | Total amount of starch/total amount of gluten | Amount of purified starch/amount of purified gluten |
| | | SCF | SAKURA | SWF | VITEN | (Mass%) | (Mass%) | (Mass%) | | | | | | |
| Test Example 1 | Example 1 | 351% | 200% | 34.9% | 100% | 351% | 487% | 12.8% | 139 | 037 | 057 | 029 | 380 | 200 |
| | Example 2 | 42.1% | 200% | 27.9% | 10.0% | 421% | 482% | 119% | 1.15 | 028 | 048 | 024 | 407 | 2.00 |
| | Example 3 | 49.1% | 20.0% | 20.9% | 100% | 491% | 47.7% | 10.9% | 097 | 0.22 | 0.41 | 0.20 | 4.39 | 2.00 |
| | Example 4 | 631% | 20.0% | 6.9% | 10.0% | 63.1% | 468% | 89% | 074 | 0.14 | 032 | 016 | 523 | 200 |
| | Example 5 | 771% | 129% | 0.0% | 10.0% | 771% | 43.0% | 80% | 0.56 | 010 | 017 | 013 | 537 | 129 |
| Test Example 2 | Example 6 | 53.3% | 0.0% | 36.7% | 100% | 53 3% | 395% | 13.1% | 0.74 | 024 | 000 | 019 | 3.03 | 0.00 |
| | Example 7 | 53.3% | 7.0% | 29.7% | 100% | 533% | 42.3% | 121% | 0.79 | 023 | 013 | 019 | 350 | 0.70 |
| | Example 8 | 53.3% | 14.0% | 226% | 100% | 53.3% | 45.1% | 11.1% | 0.85 | 0.21 | 026 | 019 | 405 | 1.40 |
| | Example 9 | 53.3% | 28.0% | 8.6% | 10.0% | 53.3% | 50.6% | 92% | 095 | 017 | 0.53 | 019 | 551 | 281 |
| | Example 10 | 53.3% | 35.1% | 1.6% | 10.0% | 53.3% | 53.4% | 8.2% | 1.00 | 0.15 | 0.66 | 0.19 | 6.49 | 3.51 |
| | Example 11 | 47.9% | 42.1% | 0.0% | 10.0% | 47.9% | 56.5% | 8.0% | 1.18 | 0.17 | 0.88 | 0.21 | 7.07 | 4.21 |
| Test Example 3 | Example 12 | 53.3% | 20.0% | 19.6% | 7.0% | 53.3% | 48.6% | 8.3% | 0.91 | 0.16 | 0.38 | 0.13 | 5.84 | 2.85 |
| | Example 13 | 53.3% | 20.0% | 18.2% | 8.4% | 53.3% | 48.1% | 9.2% | 0.90 | 0.17 | 0.38 | 0.16 | 5.20 | 2.38 |
| | Example 14 | 53.3% | 20.0% | 14.0% | 12.6% | 53.3% | 46.4% | 12.0% | 0.87 | 0.23 | 0.38 | 0.24 | 3.86 | 1.59 |
| | Example 15 | 53.3% | 20.0% | 9.8% | 168% | 53.3% | 44.8% | 14.8% | 0.84 | 0.28 | 0.38 | 0.32 | 3.02 | 1.19 |
| | Example 16 | 53.3% | 20.0% | 5.6% | 21.0% | 53.3% | 43.1% | 17.6% | 0.81 | 0.33 | 0.38 | 0.39 | 2.45 | 0.95 |
| | Example 17 | 53.3% | 17.2% | 0.0% | 29.4% | 53.3% | 38.7% | 23.6% | 0.73 | 0.44 | 0.32 | 0.55 | 1.64 | 0.58 |

In Table 1, the columns of "SCF", "SAKURA", "SWF", and "VITEN" indicate the blending proportions of the materials actually used, and the total is 100 mass%. The column of "Proportion of starch in noodle-shaped composition" and the column of "Proportion of gluten in noodle-shaped composition" mean a proportion of the total amount obtained by calculating the amounts of starch contained in the materials and a proportion of the total amount obtained by calculating the amounts of gluten contained in the materials, respectively.

### Test Example 4: Test Groups with Different Bean Flours

Each material blended at a mass proportion shown in Table 2 was experimentally produced in the same manner as in Test Example 1 to obtain noodle-shaped compositions of Examples 18 to 22. In Table 2, for "White kidney bean", white kidney bean flour from Japan Clasia Co., Ltd. was used; for "Steamed soybean", steamed soybean flour manufactured by Koga Sangyo Co., Ltd. was used; for "Steamed white kidney bean", steamed white kidney bean flour manufactured by Koga Sangyo Co., Ltd. was used; for "Steamed mung bean", steamed mung bean flour manufactured by Koga Sangyo Co., Ltd. was used; and for "steamed lentil", steamed lentil flour manufactured by Koga Sangyo Co., Ltd. was used.

### [Table 2]

**[Table 2]**

| | Examples | Materials | | | | Noodle-shaped composition | | | Noodle-shaped composition | | | | | |
|---|---|---|---|---|---|---|---|---|---|---|---|---|---|---|
| | | Bean flour | Modified starch | Whole grain wheat flour | Gluten | Amount of bean flour in terms of powder mass | Proportion of starch in noodle-shaped composition | Proportion of gluten in noodle-shaped composition | Total amount of starch/amount of bean flour | Total amount of gluten/amount of bean flour | Amount of purified starch/amount of bean flour | Amount of purified gluten/amount of bean flour | Total amount of starch/total amount of gluten | Amount of purified starch/amount of purified gluten |
| | | | SAKURA | SWF | VITEN | (Mass%) | (Mass%) | (Mass%) | | | | | | |
| | Example 18 | White kidney bean 53.3% | 20.0% | 16.7% | 10.0% | 53.3% | 44.8% | 10.3% | 0.84 | 0.19 | 0.38 | 0.19 | 4.35 | 200 |
| | Example 19 | Steamed soybean 53.3% | 20.0% | 16.7% | 10.0% | 53.3% | 26.3% | 10.3% | 0.49 | 0.19 | 0.38 | 0.19 | 2.56 | 2.00 |
| Test Example 4 | Example 20 | Steamed white kidney bean 53.3% | 20.0% | 16.7% | 10.0% | 53.3% | 44.8% | 10.3% | 0.84 | 0.19 | 0.38 | 0.19 | 4.35 | 2.00 |
| | Example 21 | Steamed mung bean 53.3% | 20.0% | 16.7% | 10.0% | 53.3% | 47.3% | 10.3% | 0.89 | 0.19 | 0.38 | 0.19 | 4.59 | 200 |
| | Example 22 | Steamed lentil 53.3% | 20.0% | 16.7% | 10.0% | 53.3% | 47.3% | 10.3% | 0.89 | 0.19 | 0.38 | 0.19 | 4.60 | 200 |

In Table 2, the columns of "SCF", "SAKURA", "SWF", and "VITEN" indicate the blending proportions of the materials actually used, and the total is 100 mass%. The column of "Proportion of starch in noodle-shaped composition" and the column of "Proportion of gluten in noodle-shaped composition" mean a proportion of the total amount obtained by calculating the amounts of starch contained in the materials and a proportion of the total amount obtained by calculating the amounts of gluten contained in the materials, respectively.

### <Preparation of Test Samples>

Test samples for evaluation were prepared by boiling the noodle-shaped compositions obtained above with boiling water for 3 minutes and then draining the noodle-shaped compositions in a colander.

### <Sensory Evaluation>

### (Texture, Taste, and Aroma)

The test samples (excluding Example 18) were evaluated for the texture (adhesion, shear resistance), the taste (sweetness), and the aroma (bean odor) according to the following evaluation criteria. The above evaluation was performed by 6 to 8 persons in charge who were fully trained and had specialized knowledge and were involved in the manufacturing and development of noodles, and the evaluations were coordinated by leveling the evaluations before the evaluation.

### [Evaluation Criteria]

### (Texture, Taste, and Aroma)

The score of the standard was set to 4 points, and the evaluation items of the sensory evaluation were graded according to the texture (adhesion, shear resistance), the taste (sweetness), and the aroma (bean odor) of each test sample in 7 stages up to 1 point to 7 points. The evaluation was performed according to the following criteria. As a reference sample, 100% soybean flour noodles (trade name: Kyushu Mamen, referred to as Mamen hereinafter) and 100% chickpea flour noodles (trade name: Barilla chickpea, referred to as Barilla hereinafter) were used. However, in Example 22, the reference sample contains only Mamen.

The evaluation was performed based on an average score from each person in charge.
1 point: remarkably lower than the reference sample
2 points: lower than the reference sample
3 points: slightly lower than the reference sample
4 points: substantially the same as the reference sample
5 points: slightly higher than the reference sample
6 points: higher than the reference sample
7 points: remarkably higher than the reference sample

That is, the meanings of the evaluation items and the scores correspond to each other as follows.
- Adhesion: 1 point = remarkably low adhesion, 7 points = remarkably high adhesion
- shear resistance: 1 point = remarkably low shear resistance, 7 points = remarkably high shear resistance
- Sweetness: 1 point = remarkably low sweetness, 7 points = remarkably high sweetness
- Bean odor: 1 point = remarkably low unpleasant bean odor, 7 point = remarkably high unpleasant bean odor

Here, the term "low shear resistance" refers to a texture that stretches rather than breaks when bitten with teeth, and conversely, the term "high shear resistance" refers to a texture that breaks when bitten with teeth. That is, a lower shear resistance results in a more chewy texture, which is preferable for noodles.

The term "sweetness" refers to a natural sweetness derived from a raw bean material instead of a strong sweetness such as a sweetness of a sweetener.

That is, the higher adhesion, the lower shear resistance, the higher sweetness, and the lower bean odor are preferable for the noodles.

### (Processing Suitability)

Each test sample was subjected to a sensory evaluation for processing suitability (during noodle making and during cooking) according to the following evaluation criteria. The processing suitability during noodle making means that the shape retention of the noodle dough is maintained at a certain level or more in a series of noodle making steps, and it is determined whether excessive adhesion to the production facility or collapse occurs, and that the processing suitability during cooking means that the shape retention of the noodle dough is maintained at a certain level or more in boiling cooking during eating. The above evaluation was performed by 6 persons in charge who were engaged in the production and development of noodles and had expertise, and the evaluations were coordinated by leveling the evaluations before the evaluation.

### [Evaluation Criteria]

∘∘: being superior to ordinary noodles
∘: same level as ordinary noodles
Δ: slightly inferior to ordinary noodles
×: clearly inferior to ordinary noodles

The term "ordinary noodles" as used herein refers to ordinary Chinese noodles containing wheat as a main raw material.

### <Physical Property Value>

Each test sample (except for Example 18) was evaluated for the strain at break, adhesion, elasticity, and hardness by the following methods.

### (Strain at break)

As one of the evaluations of the texture of the noodle-shaped composition, the strain at break was measured by the following method.

Using a texture analyzer (EZ-SX, manufactured by Shimadzu Corporation) and a 50 N load cell, a surface of the noodle-shaped composition was pressed and broken by a wedge-shaped plunger having a width of 4 cm and a radius of 0.3 at a descending speed of 1 mm/sec in a direction perpendicular to a longitudinal direction until a strain was 99%, and the strain when reaching a peak of a load in a load-strain curve obtained by continuously measuring the load, that is, the strain at break was determined. When a clear peak was not obtained, the strain at break was regarded as 99% which is the maximum strain. An average value of values obtained by measuring each composition five times by the above method was adopted as a measurement value. All the measurements were performed within 10 minutes after the heat cooking of the noodle-shaped composition.

### (Adhesion)

As one of the evaluations of the texture of the noodle-shaped composition, the adhesion was measured by the following method.

Using a texture analyzer (EZ-SX, manufactured by Shimadzu Corporation) and a 50 N load cell, a surface of the noodle-shaped composition was pressed by a cylindrical plunger having a diameter of 5 mm at a descending speed of 1 mm/sec in a direction perpendicular to a longitudinal direction until a strain was 50%, and a load was continuously measured to obtain a load-strain curve. In the curve, an area of a region where the noodle-shaped composition exhibits negative energy for pulling the plunger after the first compression is completed, that is, the adhesion was determined. An average value of values obtained by measuring each composition five times by the above method was adopted as a measurement value. All the measurements were performed within 10 minutes after the heat cooking of the noodle-shaped composition.

The items of "Evaluation" in Tables 3 to 5 were evaluated according to the following criteria regarding the above strain at break and adhesion.

### [Evaluation Criteria]

∘: the strain at break was 75% or more and the adhesion was 0.03 mJ or more
×: the above was not satisfied

### (Elasticity)

As one of the evaluations of the texture of the noodle-shaped composition, the strain at break was measured by the following method.

Using a texture analyzer (EZ-SX, manufactured by Shimadzu Corporation) and a 50 N load cell, a surface of the noodle-shaped composition was pressed and broken by a wedge-shaped plunger having a width of 4 cm and a radius of 0.3 at a descending speed of 1 mm/sec in a direction perpendicular to a longitudinal direction until a strain was 99%, and the slope (N/mm) in the region of the strain of 0% to 10% of the load-strain curve obtained by continuously measuring the load was determined; this value was taken as the Elasticity. An average value of values obtained by measuring each composition five times by the above method was adopted as a measurement value. All the measurements were performed within 10 minutes after the heat cooking of the noodle-shaped composition.

### (Hardness)

As one of the evaluations of the texture of the noodle-shaped composition, the strain at break was measured by the following method.

Using a texture analyzer (EZ-SX, manufactured by Shimadzu Corporation) and a 50 N load cell, a surface of the noodle-shaped composition was pressed and broken by a wedge-shaped plunger having a width of 4 cm and a radius of 0.3 at a descending speed of 1 mm/sec in a direction perpendicular to a longitudinal direction until a strain was 99%, and the load when reaching a peak of a load in a load-strain curve obtained by continuously measuring the load, that is, the breaking load was determined. When a clear peak was not obtained, the load at a time point when the maximum strain of 99% was reached was defined as the breaking load. An average value of values obtained by measuring each composition five times by the above method was adopted as a measurement value. All the measurements were performed within 10 minutes after the heat cooking of the noodle-shaped composition.

### <Water Absorption>

The materials blended at the mass proportions shown in Table 6 below were experimentally produced in the same manner as in Test Example 1 to obtain a noodle-shaped composition of Example 23. For the noodle-shaped composition, dried noodles equivalent to one serving (about 80 g) prepared from the noodle-shaped composition were cooked by boiling for a predetermined time in 1000 ml of boiled hot water, the weight of the noodles having absorbed water after the boiling cooking for a predetermined time was measured based on the dry weight before the cooking, and the weight transition was measured to evaluate the water absorption. In addition, as a comparative example, the same water absorption evaluation was performed on Barilla (100% chickpea flour noodles).

The results of the sensory evaluation, the processability evaluation, and the physical property evaluation in Test Examples 1 to 4 are shown in Tables 3 and 4.

It should be noted that Table 5 shows the results of the same evaluations performed on not only the Mamen (100% soybean flour noodles) and Barilla (100% chickpea flour noodles) as the reference samples but also thin Mamen noodles (100% soybean flour noodles), and ZENB NOODLE (100% yellow pea flour, manufactured by ZENB JAPAN). In addition, "-" in Tables 3 to 5 means "not measured".

The results of the water absorption evaluation are shown in Table 7.

### [Table 3]

**[Table 3]**

| Test Example 1: Difference in bean flour proportion | | | | | | | | | | | |
|---|---|---|---|---|---|---|---|---|---|---|---|
| Sensory evaluation scores (average scores) | Examples | Example 1 | | Example 2 | | Example 3 | | Example 4 | | Example 5 | |
| | Reference samples | Mamen | Barilla | Mamen | Barilla | Mamen | Barilla | Mamen | Barilla | Mamen | Barilla |
| | Adhesion | 5.57 | 6.00 | 6.00 | 6.67 | 5.71 | 6.00 | 6.14 | 6.00 | 586 | 6.50 |
| | Shear resistance | 2.71 | 1.83 | 2.29 | 1.50 | 2.29 | 1.83 | 2.14 | 2.00 | 1.86 | 1.33 |
| | Sweetness | 5.86 | 6.00 | 6.14 | 6.50 | 6.14 | 5.50 | 5.57 | 6.33 | 5.71 | 6.67 |
| | Bean odor | 1.57 | 1.50 | 1.43 | 1.83 | 157 | 1.33 | 2.00 | 1.67 | 2.71 | 2.33 |
| Processing suitability | During noodle making | ○ | | ○ | | ○ | | ○ | | Δ | |
| | During cooking | ○ | | ○ | | ○ | | ○ | | ○ | |
| Measured physical properties | Strain at break | 97.05 | | - | | - | | | | 98.32 | |
| | Adhesion | 0.15 | | - | | - | | 0.11 | | 0.10 | |
| | Elasticity | 0.16 | | - | | - | | - | | 0.20 | |
| | Hardness (breaking load) | 0.69 | | - | | - | | - | | 0.67 | |
| | Evaluation | ○ | | - | | - | | - | | ○ | |

| Test Example 2: difference in starch proportion | | | | | | | | | | | | | |
|---|---|---|---|---|---|---|---|---|---|---|---|---|---|
| Sensory evaluation scores(average scores) | Examples | Example 6 | | Example 7 | | Exam ple 8 | | Exam ple 9 | | Example 10 | | Example 11 | |
| | Reference samples | Mamen | Barilla | Mamen | Barilla | Mamen | Barilla | Mamen | Barilla | Mamen | Barilla | Mamen | Barilla |
| | Adhesion | 5.50 | 5.63 | 588 | 5.75 | 5.13 | 5.50 | 5.25 | 5.75 | 5.75 | 563 | 5.75 | 5.75 |
| | Shear resistance | 2.50 | 1.88 | 2.00 | 1.88 | 1.88 | 1.75 | 2.00 | 1.63 | 2.00 | 1.88 | 2.00 | 1.75 |
| | Sweetness | 6.38 | 5.75 | 6.13 | 6.00 | 6.25 | 5.75 | 5.88 | 6.00 | 588 | 5.75 | 5.88 | 5.13 |
| | Bean odor | 1.38 | 1.88 | 1.38 | 1.50 | 1.50 | 1.50 | 1.75 | 1.63 | 1.63 | 1.50 | 1.63 | 1.63 |
| Processing suitability | During noodle making | Δ | | Δ | | ○ | | ○ | | Δ | | Δ | |
| | During cooking | ○ | | ○ | | ○ | | ○ | | ○ | | ○ | |
| Measured physical properties | Strain at break | 98.37 | | - | | - | | 92.71 | | - | | 91.79 | |
| | Adhesion | 0.10 | | - | | - | | 0.13 | | - | | 0.12 | |
| | Elasticity | 0.12 | | - | | - | | 0.18 | | - | | 0.18 | |
| | Hardness (breaking load) | 0.83 | | - | | - | | 0.65 | | - | | 0.55 | |
| | Evaluation | ○ | | - | | - | | ○ | | - | | ○ | |

### [Table 4]

**[Table 4]**

| Test Example 3: difference in gluten proportion | | | | | | | | | | | | | |
|---|---|---|---|---|---|---|---|---|---|---|---|---|---|
| Sensory evaluation scores (average scores) | Examples | Example 12 | | Example 13 | | Exam ple 14 | | Example 15 | | Example 16 | | Example 17 | |
| | Reference samples | Mamen | Barilla | Mamen | Barilla | Mamen | Barilla | Mamen | Barilla | Mamen | Barilla | Mamen | Barilla |
| | Adhesion | 5.60 | 5.00 | 6.17 | 5.67 | 6.00 | 5.33 | 6.00 | 5.67 | 5.33 | 5.00 | 5.00 | 4.83 |
| | Shear resistance | 2.40 | 2.20 | 1.83 | 1.50 | 2.00 | *2.17* | 2.33 | 1.83 | 2.67 | 2.50 | 2.83 | 2.83 |
| | Sweetness | 5.60 | 4.60 | 6.17 | 5.50 | 6.17 | 5.67 | 6.00 | 5.50 | 5.50 | 5.33 | 5.50 | 5.33 |
| | Bean odor | 2.80 | 2.60 | 1.83 | 2.17 | 1.50 | 2.33 | 1.83 | 2.33 | 1.83 | 2.17 | 1.83 | 2.33 |
| Processing suitability | During noodle making | ○ | | ○ | | ○ | | Δ | | Δ | | × | |
| | During cooking | ○ | | ○ | | ○ | | ○ | | ○ | | ○ | |
| Measured physical properties | Strain at break | 97.21 | | - | | 96.11 | | - | | 99.68 | | - | |
| | Adhesion | 0.06 | | - | | 0.10 | | - | | 0.12 | | - | |
| | Elasticity | 0.19 | | - | | 0.18 | | - | | 0.22 | | - | |
| | Hardness (breaking load) | 0.38 | | - | | 0.86 | | - | | 1.43 | | - | |
| | Evaluation | ○ | | - | | ○ | | - | | ○ | | - | |

| Test Example 4: Difference in bean flour | | | | | | | | |
|---|---|---|---|---|---|---|---|---|
| Sensory evaluation scores (average scores) | Examples | Example 19 | | Example 20 | | Example 21 | | Example 22 |
| | Reference samples | Mamen | Barilla | Mamen | Barilla | Mamen | Barilla | Barilla |
| | Adhesion | 5.4 | 6.00 | 4.60 | 5.40 | 5.40 | 5.20 | 5.6 |
| | Shear resistance | 3.6 | 3.40 | 3.20 | 3.20 | 4.20 | 3.60 | 3.8 |
| | Sweetness | 6.4 | 4.20 | 5.60 | 6.00 | 4.80 | 5.20 | 44 |
| | Bean odor | 2.8 | 2.60 | 2.60 | 3.20 | 2.60 | 3.60 | 28 |
| Processing surtability | During noodle making | ○ | | Δ | | Δ | | Δ |
| | During cooking | ○ | | ○ | | Δ | | × |
| Measured physical properties | Strain at break | 86.84 | | 77.23 | | - | | - |
| | Adhesion | 0.03 | | 0.10 | | - | | - |
| | Elasticity | 0.25 | | 0.38 | | - | | - |
| | Hardness (breaking load) | 0.53 | | 0.65 | | - | | - |
| | Evaluation | ○ | | ○ | | - | | - |

**[Table 5]**

| Comparative Example (commercial product) | | | | | |
|---|---|---|---|---|---|
| Measured physical properties | Comparative Example | Barilla | Mamen | Thin Mamen noodles | ZENB |
| | Strain at break | 60.96 | 82.80 | 95.29 | 99.00 |
| | Adhesion | 0.07 | 0.00 | 0.01 | 0.01 |
| | Elasticity | 0.38 | 0.28 | 0.22 | 0.14 |
| | Hardness (breaking load) | 0.98 | 0.91 | 1.22 | 1.11 |
| | Evaluation | × | × | × | × |

### [Table 6]

**[Table 6]**

| Examples | Materials | | | | Noodle-shaped composition | | | Noodle-shaped composition | | | | | |
|---|---|---|---|---|---|---|---|---|---|---|---|---|---|
| | Bean flour | Modified starch | Whole grain wheat flour | Gluten | Amount of bean flour in terms of powder mass | Proportion of starch in noodle-shaped composition | Proportion of gluten in noodle-shaped composition | Total amount of starch/amount of bean flour | Total amount of gluten/amount of bean flour | Amount of purified starch/amount of bean flour | Amount of purified gluten/amount of bean flour | Total amount of starch/total amount of gluten | Amount of purified starch/amount of purified gluten |
| | SCF | SAKURA | SWF | VITEN | (Mass%) | (Mass%) | (Mass%) | | | | | | |
| Example 23 | 53.3% | 20.0% | 16.7% | 10.0% | 53.3% | 475% | 10.3% | 0.89 | 019 | 0.38 | 019 | 4.61 | 200 |

**[Table 7]**

| | Weight change proportion: (%) | | |
|---|---|---|---|
| | 3 minutes | 6 minutes | 9 minutes |
| Example 23 | 229% | 301% | 351% |
| Barilla | 168% | 195% | 223% |

| | | | |
|---|---|---|---|
| *To dry weight | | | |

In the noodle-shaped compositions of Examples, even when the type of the bean flour and the content ratios of the bean flour, starch, and gluten were changed, the sensory evaluation of the texture, taste, and aroma was excellent as compared with the reference sample, and the physical property values such as the strain at break and the adhesion were also excellent. In addition, many of the noodle-shaped compositions of Examples were also excellent in processing suitability during noodle making and cooking. In addition, the noodle-shaped compositions of Examples were also excellent in water absorption.

Although embodiments have been described above, it is needless to mention that the present invention is not limited to the examples. It is obvious that one skilled in the art can reach modified examples or corrected examples within the scope described in the claims, and it is understood that the examples of course belong to the technical scope of the present invention. The constituent features in the embodiments may be combined freely within the scope which does not deviate from the contents of the present invention.

Although the present invention has been described in detail with reference to specific embodiments, it is needless to say that the present invention is not limited to such examples. It is obvious that one skilled in the art can reach modified examples or corrected examples within the scope described in the claims, and it is understood that the examples of course belong to the technical scope of the present invention. The constituent features in the embodiments may be combined freely within the scope which does not deviate from the contents of the present invention.

The present application is based on a Japanese patent application filed on March 31, 2023 (patent application No. JP2023-058983), and the contents thereof are incorporated in the present application by reference.

## Claims

1. A noodle-shaped composition comprising:
35 mass% to 85 mass% of bean flour in terms of powder mass,
wherein a proportion of starch in the noodle-shaped composition is 20 mass% to 60 mass%, and
a proportion of gluten in the noodle-shaped composition is 7 mass% to 25 mass%.

2. The noodle-shaped composition according to claim 1, wherein a strain at break is 75% or more, the strain at break being measured by the following method 1:
[Method 1]
Using a texture analyzer, a surface of the noodle-shaped composition is pressed and broken by a wedge-shaped plunger at a descending speed of 1 mm/sec in a direction perpendicular to a longitudinal direction until a strain is 99%, and the strain when reaching a peak of a load in a load-strain curve obtained by continuously measuring the load is determined, and this strain is defined as the strain at break.

3. The noodle-shaped composition according to claim 1, wherein adhesion is 0.03 mJ or more, the adhesion being measured by the following method 2:
[Method 2]
Using a texture analyzer, a surface of the noodle-shaped composition is pressed by a cylindrical plunger at a descending speed of 1 mm/sec in a direction perpendicular to a longitudinal direction until a strain is 50%, and a load is continuously measured to obtain a load-strain curve. In the curve, an area of a region where the noodle-shaped composition exhibits negative energy for pulling the plunger after the first compression is completed, and this area is defined as the adhesion.

4. The noodle-shaped composition according to claim 1, wherein the bean flour is at least one bean flour selected from the group consisting of chickpea flour, soybean flour, pea flour, kidney bean flour, mung bean flour, and lentil flour.

5. The noodle-shaped composition according to claim 1, wherein the bean flour is chickpea flour.

6. The noodle-shaped composition according to claim 1, wherein the bean flour is bean flour obtained by heating and steaming a raw bean material and milling the steamed raw bean material.

7. The noodle-shaped composition according to claim 1, wherein the bean flour has an average particle diameter of 10 µm to 60 µm.

8. The noodle-shaped composition according to claim 1, wherein the bean flour contains 20 mass% to 40 mass% of protein and 30 mass% to 60 mass% of carbohydrates.

9. The noodle-shaped composition according to claim 1, wherein at least a part of the starch contained in the noodle-shaped composition is derived from modified starches.

10. A method for producing the noodle-shaped composition, which is a method for producing the noodle-shaped composition according to any one of claims 1 to 9, the method comprising:
mixing bean flour, starch, and gluten to obtain a dough; rolling the obtained dough; and cutting the rolled dough into a noodle-shaped composition.

11. The method for producing a noodle-shaped composition according to claim 10, comprising:
a step of heating and steaming the noodle-shaped composition cut into a noodle shape.

12. The method for producing a noodle-shaped composition according to claim 10, comprising:
a step of drying the noodle-shaped composition cut into a noodle shape.

13. The method for producing a noodle-shaped composition according to claim 10, comprising:
a step of obtaining the bean flour by heating and steaming a raw bean material and milling the steamed raw bean material.

14. A noodle set comprising the noodle-shaped composition according to any one of claims 1 to 9 and a seasoning liquid.
